Europäisches Patentamt

(19) European Patent Office

Office européen des brevets

(11) Publication number: **0 117 015**
**A1**

(12) **EUROPEAN PATENT APPLICATION**

(21) Application number: **84300021.7**

(22) Date of filing: **03.01.84**

(51) Int. Cl.³: **C 08 L 21/00**
**A 61 J 1/00**
**//(C08L21/00, 23/02)**

(30) Priority: **10.01.83 US 457099**

(43) Date of publication of application:
**29.08.84 Bulletin 84/35**

(84) Designated Contracting States:
**AT BE CH DE FR GB IT LI LU NL SE**

(71) Applicant: **TOMPKINS RUBBER COMPANY**
**P.O. Box 160 550 Township Line Road**
**Blue Bell Pennsylvania 19422(US)**

(72) Inventor: **Buchanan, Robert Lester**
**954 Mystic Lane**
**Norristown Pennsylvania 19403(US)**

(72) Inventor: **Dull, Henry Francis, Jr.**
**246 Park Road**
**Ambler Pennsylvania 19002(US)**

(74) Representative: **Shaw, Laurence**
**George House George Road**
**Edgbaston Birmingham B15 1PG(GB)**

㉔ **Rubber based composition, especially for medical components.**

㉼ A peroxide cured rubber based composition having properties which make it suitable for use as medical components, especially of infusion sets, comprises a major proportion of a natural or synthetic rubber component and a minor proportion of a high density polyolefin, these being substantially completely cross-linked to the peroxide curing agent.

EP 0 117 015 A1

TOMPKINS RUBBER COMPANY        1

## RUBBER BASED COMPOSITION

## ESPECIALLY FOR MEDICAL COMPONENTS

The invention relates to a rubber based composition, especially for use in medical components, particularly as parts of human or animal infusion sets.

Infusion sets are used in the practice of medicine in humans and animals for the transport of fluids such as saline and blood. The human infusion sets as shown in U.S. patent No. 3886937, the entire disclosure of which is incorporated herein by reference, comprise tubing or conduits which require rubber components, such as connectors, sleeve stoppers, injection sites and other typical rubber parts. These rubber components have generally been made of pure gum rubber which has been cured by sulphur and other catalysts and accelerators. While such sulphur cured rubber components have functioned very satisfactorily, it has been determined that powerful carcinogens and other undesirable by-products may be formed in the vulcanization process.

It is known to make the rubber items from a peroxide cured rubber and resin composition, see e.g. U.S. patent 3758643. However, such items are generally unsatisfactory for use in medicine because of poor tear strength and tackiness, poor needle coring properties and poor tensile strength.

It is one object of the invention to provide improved rubber based components for use in medicine, e.g. in infusion sets. In particular it is an object to provide a rubber based component with a reduced tendency to damage when a needle is inserted. Another object is to produce components which are sufficiently transparent or translucent so as to reveal the presence of needles and connecting means.

According to one aspect of the invention there is provided a peroxide cured rubber based composition comprising a natural or synthetic rubber and a polyolefin characterised in that the composition comprises a major proportion of a natural and/or synthetic rubber component and a minor proportion of a high density polyolefin component, these being substantially completely crosslinked by the peroxide curing agent.

Most preferably, the rubber component is present in an amount by weight of from 40% to about 90%. The high density polyolefin component is preferably present in an amount by weight of from about 4% to about 20%. A filler component is preferably present, and in an amount by weight of from about 4% to about 30%.

The rubber components preferably comprises a mixture of a synthetic and natural rubber. The synthetic natural rubber has the advantage of giving less amber discoloration than a pale crepe natural rubber. A brominated copolymer synthetic rubber is preferably present and lends aging resistance and eases processing. This ingredient may be present from 0 to 50% by weight. Other grades of natural rubber may be used, depending on the colour desired.

Most preferably the high density polyolefin is incorporated as a masterbatch blend with a natural rubber. The masterbatch preferably comprises 75% natural rubber and 25% high density polyethylene. The high density polyethylene can be varied from about 4% to 20%. While polyethylene may be present in a proportion greater than 25% the resulting product may lack rubber-like qualities. A preferred polyolefin is high density polyethylene having a density of at least 0.915 and more preferably 0.965 or greater, with a percentage crystallinity as determined by nuclear magnetic resonance at room temperature of approximately 80 or more, and preferably 90 or greater. Other high density polyolefins are suitable.

The hardness of the cured rubber composition can be varied from 35 Duro A hardness to 70 Duro A hardness which is a preferred range for pharmaceutical/medical grade rubber. The proportion of the high density polyolefin is varied according to the desired Duro A hardness. The hardness increases with increasing content of the polyolefin. For a composition having 98 parts of a mixture of natural and synthetic rubbers, a content of 8 parts high density polyethylene and 12 parts of filler will give a Duro A hardness of about 35. When the polyethylene content is increased to 10 parts the hardness of the cured product is about 55; when the polyethylene content is increased to 20 parts and the filler content to 20 parts, the cured product has a hardness of about 60.

A preferred peroxide cure agent is 2, 5 dimethyl-2,5 di(t-butyl peroxy) hexane (sold under Trade marks Varox and Lupersol 101) that is present in an amount of 1 part by weight. The peroxide substantially cross-links or polymerises all the rubber and the polyolefin components making up the product substantially insoluble in many medical liquids. Other peroxides, such as dicumyl peroxide, which cross link or polymerise hydrocarbon-type rubbers and plastics, can also be used.

A trimethylolpropane methacrylate is preferably present as an activator for peroxide curing agent and also as a cross-
linking agent.  Other co-agents may also be used.  By virtue
of the two curing agents there is little or no ingredient or
by product to be released as an extractable into a medical
environment.

The filler is preferably a fine particle silica selected to
lend transparency to translucency in the finished product as
well as improving tensile strength and tear strength.  A
preferred filler is fumed, coloidal silica known as Cab-O-
Sil MS-7 (fumed hydrolyzed silica - 0.014 micron particle
size).  Other inorganic fillers, normally used in the rubber
industry, can be used such as clay, blanc fixe and talc.
The preferred filler is a very pure fine silica.

The amount of filler is usually varied from 5 to 60 or more
parts, depending upon the filler used and the desired
Durometer A Hardness.  Higher amounts of a given filler have
the effect of increasing the Durometer A Hardness which is
also controlled by the content of high density polyolefin.
A silicone gum is preferably present to improve the
processing properties.

Tack reducing additives may be present.  A low molecular
weight low density polyethylene (A-C Polyethylene 617),
about 2%, and/or microcrystaline petroleum wax (sold under the Trade Mark Vanwax H), about 1% by weight may be present
to prevent surface tack on the finished washed parts.
Another optional additive is white petrolatum, U.S.P. grade
(Petrolatum B) in an amount of 1% by weight as a plasticizer
t0 improve processing properties.  Another is zinc stearate
in an amount of 0.5% by weight as a stabilizer and to
improve aging resistance.  Another activator is double
pressed stearic acid, which may be present in an amount of
0.5% by weight.  Another optional ingredient is Antioxidant
425, a trademark of American Cyanamid Co., (2, 2'
methylenebis 6-tert-butyl-4-ethyl-phenol) which is present
in an amount of 0.5% by weight to improve resistance to
aging and heat.

An alternative or additional plasticizer is a synthetic
polyterpene resin (Nevtac 100), preferably in a proportion
of 1% of total composition.

A preferred composition is made up from a formulation
comprising the following components:

                                                    Parts by Weight


Natural Rubber (No. 1 Pale Crepe)                       20.00


Brominated isobutylene-isoprene copolymer
(Bromobutyl X-1)                                        10.00

0117015

Synthetic cis-polyisoprene (Natsyn 2200)          38.00

Masterbatch:10 parts high density polyethylene

in 30 parts No 1 pale crepe natural rubber        40.00

Trimethylolproprane trimethacrylate

(Sartomer SR-350)                                  1.00

Methyl Vinyl Silicone Gum (410 Silicone Gum)       1.00

Silica Filler (Cab-O-Sil MS 7)                    10.00
                                                  -------
                                                 120.00
                                                  -------

The invention includes a method of making a composition as disclosed herein characterised by mixing together a major proportion of a natural or synthetic rubber component and a minor proportion of a high density polyolefin component so as to form a dispersion, allowing the dispersion to cool, and adding the peroxide curing agent and heating to form the substantially completely cross-linked composition.

The invention is illustrated by the following non-limitative examples.

Example 1

Masterbatch (54.48 kilograms) was prepared by mixing 40.86 kilograms of No 1 thick crepe (NR) and 13.62 kilograms of high density polyethylene (Soltex T60-2000). The components were initially brought together at 38° C. for 30 seconds in a No. 3 Banbury mixer. The temperature rose to 94°C. and mixing continued for 2 minutes. With continued mixing for 3 minutes the temperature increased to 150°C. After 2½ minutes of mixing the temperature rose to 178°C. The highly dispersed masterbatch formed was transferred to a 1.52 metre batch-off mill, blended and then cut into slabs measuring about 61 cm x 1.52 m x 1.91 cm. The slabs were dipped in a dispersion of zinc stearate to enable easy separation of the slabs.

The following ingredients were added in the order specified to the Banbury mixer the rotor adjusted to 70 rpm:

1. No. 1 Crepe (8960 grams)
2. Natysn 2200 (17024 grams)
3. Bromobutyl X-2 (4480 grams)
4. HDPE Masterbatch prepared as above (17920 grams)
5. Sartomer 350 (448 grams)
6. 410 Silicone Gum (448 grams)

7.  Cab-O-Sil MS-7 (8960 grams)

8.  Polyethylene 617 (896 grams)

9.  Vanwax H (448 grams)

10. Petrolatum B (448 grams)

11. Zinc Stearate (224 grams)

12. Stearic Acid (224 grams)

13. Antioxidant 425 (224 grams)

14. Nevtac 100 Resin (448 grams)

The initial temperature was 49°C. which then rose to 66°C.. Over the next 4 3/4 minutes the temperature rose to 150°C. with constant mixing and agitation in the Banbury mixer. The mix was then removed from the Banbury mixer and allowed to cool.

The peroxide curing agent was added just prior to the extrusion step when the curing mix was extruded into a long rod having an approximate diameter of 3.175 mm to 19.05 mm and then cut into plugs having a thickness of 3.175 mm to 19.05 mm or cut into smaller chips. These plugs or chips were then moulded in a rubber moulding press at 167°C to 184°C for 15 to 30 minutes. The end product had the following properties.

Shore A Hardness: 55 ± 5 Specific Gravity: 1.00 ± .05 Cure                : 30 minutes at 167°C.

% Ash               : 14.6% ± 2.0%

Colour              : Amber-transparent

Tensile Strength .............. 209.14 kg/cm$^2$

% Elongation ................. 625

Durometer A Hardness .......... 55

Specific Gravity ............. 1.01

When tested in accordance with the U.S. Pharmacopeia XX, p. 918, Elastomeric Closures for Injections, Physicochemical Test Procedure the results were:

Turbidity (Nephelos) .......... 2.0

pH ........................... 5.70

pH Change .................... −.62

$I_2$ml .01N .................... −.01

These extraction test results indicate very low amounts of extractables, which should be quite acceptable for most pharmaceutical applications.

Toxicity Tests: USPXX, p. 917 Biological Toxicity test, gave excellent results for cytotoxicity using Mouse cells and Human Blood Haemolysis test results.

The finished moulded parts may include needle puncture indicators and other moulded-in marks. The rubber parts had good tear strength so that needle punctures are generally confined to the actual area of penetration.

## Example II

All the following ingredients were placed in a Banbury No 3 mixer having a 300 horsepower motor to make the uncured composition in a one-step process:

|  | GRAMS |
|---|---|
| Natsyn 2200 | 17,252 |
| No 1 Crepe | 22,700 |
| Bromobutyl X-2 | 4,540 |
| Polyethylene T-60-2000 | 4,540 |
| Sartomer 350 | 454 |
| 410 Silicone Gum | 454 |
| HISIL 233 (precipitated hydrated silica 0.022 micron particle size) | 9,080 |
| Polyethylene 617 | 908 |
| Vanwax H | 454 |
| Petrolatum B · | 454 |

| | |
|---|---|
| Vanfre AP-2 | 454 |
| Nevtac 100 | 454 |
| Wingstay L | 113 |

Once all the ingredients have been placed in the mixer the temperature is brought to 66°C. After 45 seconds the temperature increased to 69°C and after 2 minutes and 15 seconds the temperature was 94°C. Upon further mixing and ramming the temperature reached 178°C after 7 minutes. After 8 minutes of mixing the temperature reached 192 °C. Thus, the one step process is run to a somewhat higher temperature than that reached with the two step process of Example I.

The final mixed product is formed into slabs and cooled as with in the second step of Example I. When needed, the one step product was fed to the extruder. At the warm up mill of the extruder the Varox liquid peroxide catalyst (454 grams) was added. Product made from the plugs and chips produced by the one step process, was found to possess all of the significant features of the product of Example I.

## CLAIMS

1. A cured rubber based composition comprising a natural or synthetic rubber and a polyolefin characterised in that the composition comprises a major proportion of a natural and/or synthetic rubber component, and a minor proportion of a high density polyolefin component, the components being substantially completely cross-linked by the peroxide curing agent.

2. A composition according to Claim 1 characterised in that a fine particle silica filler is present.

3. A composition according to Claim 2 characterised in that the filler is a fine particle silica selected to lend transparency or translucency to the cured composition, preferably fumed, colloidal silica.

4. A composition according to any preceding Claim characterised in that the rubber component is present in an amount by weight of between about 40 to about 90%, the high density polyolefin is present in an amount by weight of from about 4% to about 20%, the balance being filler component.

5.   A composition according to Claim 1, 2, 3 or 4 characterised in that the proportion of the high density polyolefin component is adjusted to give the cured composition a Duro A hardness in the range of from about 35 to about 70.

6.   A composition according to any preceding Claim characterised in that the high density polyolefin was incorporated as  a masterbatch comprising a natural rubber and from about 4% to about 25% high density polyethylene.

7.   A composition according to any preceding Claim characterised in that the peroxide cure catalyst is 2, 5 -dimethyl-2, 5 di(t-butyl peroxy) hexane or dicumyl peroxide.

8.   A composition according to Claim 7 characterised in that trimethylolpropane methacrylate is present as an activator for peroxide curing agent and as a cross-linking agent.

9.   A composition according to any preceding Claim characterised in that the rubber component comprises a mixture of natural rubber, a brominated isoprene copolymer and synthetic cis polyisoprene.

10.   A composition according to any preceding Claim

<u>characterised</u> <u>in</u> <u>that</u> the composition was prepared from a
formulation comprising the following components:

|  | Parts by weight |
|---|---|
| Natural Rubber | 20.00 |
| Brominated isobutylene-isoprene copolymer | 10.00 |
| Synthetic cis-polyisoprene | 38.00 |
| Masterbatch:10 parts high density polyethylene in 30 parts No 1 pale crepe natural rubber | 40.00 |
| Trimethylolproprane trimethacryalte | 1.00 |
| Methyl Vinyl Silicone Gum | 1.00 |
| Silica Filler | 10.00 |
|  | 120.00 |

11.  A method of making a composition according to Claim 1,
<u>characterised</u> <u>by</u> mixing together a major proportion of a
natural and/or synthetic rubber component and a minor proportion of a high density polyolefin component so as to form a dispersion, allowing the dispersion to cool, and adding the peroxide curing agent and heating to form the substantially completely cross-linked composition.

12. A cured composition according to any of Claims 1 to 10 or whenever made by a method according to Claim 11 characterised in that the composition is formed into the shape of a medical component for use in infusion sets.

**0117015**

Application number

## EUROPEAN SEARCH REPORT

European Patent Office

EP 84 30 0021

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 255 511 (ABBOTT LABORATORIES) <br> * Claims 1,5 * | 1-8,11 | C 08 L 21/00 <br> A 61 J 1/00 // <br> (C 08 L 21/00 <br> C 08 L 23/02 ) |
| | --- | | |
| X | FR-A-2 195 645 (BP CHEMICALS INTERNATIONAL LTD.) <br> * Claims 1,5; example 2 * | 1-8,11 | |
| | --- | | |
| X | GB-A- 837 525 (HERCULES POWDER) <br> * Claim 1; page 4, line 110; page 5, lines 58-63 * | 1,11 | |
| | --- | | |
| A | GB-A-2 046 276 (YOKAHAMA RUBBER) <br> * Claim 8 * | 9,10 | |
| | --- | | TECHNICAL FIELDS SEARCHED (Int. Cl. ³) |
| A | GB-A-2 093 473 (ALZA CORP.) <br> * Claim 1 * | 1,2 | C 08 L |
| | ----- | | |

The present search report has been drawn up for all claims

| Place of search THE HAGUE | Date of completion of the search 11-04-1984 | Examiner VAN HUMBEECK F.W.C. |
|---|---|---|

EPO Form 1503. 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document